# EUROPEAN PATENT APPLICATION

(11) **EP 1 791 125 A2**
(43) Date of publication of application: **30.05.2007**
(21) Application number: 06255917.4
(22) Date of filing: 20.11.2006
(51) Int. Cl.: G11B 20/18

(54) **Use of directory revision number to validate directory**

(30) Priority: 29.11.2005 US 290957
(71) Applicant: QUANTUM CORPORATION, San Jose, CA 95110 (US)
(72) Inventor: Eding, Dwayne A., Longmont, CO 80501 (US)
(74) Representative: Charig, Raymond Julian

(57) **Abstract**

An information storage medium such as a magnetic tape medium records a directory revision number as part of each block written to the medium (e.g., data block, ECC block, or information block). The directory revision number can determine if the directory that was read from the tape is valid for the block that was written with that directory revision number. The directory revision number may also be used to rebuild the directory.

## Description

### BACKGROUND OF THE INVENTION

### 1. Field of the Invention

The present invention generally relates to validating and verifying the validity of a directory of an information storage medium, and particularly to controlling writing and reading of data blocks, ECC blocks, and/or information blocks of an information storage medium based on the validity of the directory information.

### 2. Related Art

Information storage media devices, such as magnetic tape media, are used by computer peripheral devices to store and record data. In particular, linear data tape is one variety of storage media that may be read and/or written as the linear data tape streams past a head assembly. Tape moves past the head assembly in both a forward or reverse direction, and one or more "tracks" of information are recorded or read from the tape in a direction that is parallel with the direction of the movement of the tape.

A media drive may be used with a storage medium. Media drives typically include a head assembly to write and/or read information to a storage media. A head assembly (e.g., a recording head assembly) may include multiple heads that are laterally adjacent to each other. The storage media is typically organized so that it can interact with the head assembly. According to one format, physical tracks may be grouped according to bands, channels and logical tracks. A physical track is the area transversed on the tape medium by a recording head at a particular lateral position. Physical tracks laterally adjacent to each other and traversed by the same recording head at different lateral positions within a band are associated with the same "channel." (For the sake of convenience, we will sometimes refer herein to a head operating within a band as a "channel.") For example, multiple physical tracks written by one head in the same direction may be laterally adjacent to each other as a group, followed by another set of physical tracks associated with another channel. A head can step laterally to write physical tracks within a band, but stops before it reaches a track written by the next adjacent head in the head assembly, to avoid overwriting the track written by the next adjacent head. The group of physical tracks associated with a channel corresponds to a "logical track." Unless otherwise indicated herein, any reference to a "track" refers to a physical track. All the adjacent physical tracks traversed in one direction by all recording heads in a head assembly represent a "band."

The media drive (e.g., a tape drive) receives data from the computer or data processing system. The information is typically formatted (e.g., by a formatter) into a sequence of blocks that may be recorded into tracks. Blocks may be data blocks (e.g., containing user data), error correction code ("ECC") blocks, information blocks (e.g., containing metadata, such as filemarks, directories, Dmarks, etc.), or combinations thereof. Typically, each block also contains additional information such as a preamble, a header, a postamble (including ECC information). For example, blocks typically include a block number or block address assigned by the formatter. Blocks may be recorded (written) to the tape in a sequential manner. Blocks are typically the smallest elements of information that are read and written. Each block is written by a single head with an unwritten gap between the blocks.

In general, blocks of information are read and written sequentially, and may be accessed multiple times. This is particularly true with storage media such as linear data tape. Thus, one or more directories may be included with the storage media to provide information specific to the data tape. For example, the directory may indicate when the data was last written, the end of data ("EOD") location, Dmarkers (used to optimize spacing algorithms), end of track ("EOT") locations, and other indexing and identification information. A media drive (e.g., a tape drive controller of a media drive) can read a directory to help control the read/write actions of the tape drive for a given linear tape.

When a linear data tape is read from the beginning, the directory is typically the first thing that is read. Problems may arise when one or more of the directories on the tape are not properly updated. For example, one or more of the directories may not have been updated after blocks of information were written to the linear tape, because of an override or a power interruption. Thus, there may be no way to know if the directory that was recovered is up to date, or if the last attempt to write a directory failed. For example, the only way to validate a directory may be to read to the actual EOD and compare this address to the directory address. A similar determination may be made with the EOTs.

### SUMMARY OF THE INVENTION

Described herein are media drives and methods for creating, revising and using directory revision numbers. Directory revision numbers may be used to indicate the revision number of data or other information for a block (e.g., a data block, an ECC block, an information block, etc.) on a storage medium device, and may be used to indicate the validity of a directory and to rebuild a storage directory.

In one variation, a media drive includes validation logic for verifying the validity of a directory of a storage media device (including a storage medium). The media drive may include a recording head to read or write the storage medium and validation logic for comparing a first directory revision number with a second directory revision number from a block on the storage medium to determine whether the first directory revision number is most recent directory revision number.

The media drive may also include invalidating logic for invalidating metadata in a directory if the first directory revision number is not the most recent directory revision number on the storage medium. The invalidating logic is operable to invalidate any appropriate type of metadata, including an entire directory, an EOD location a filemark location, a Dmark, etc.

The media drive may also include rebuilding logic for rebuilding a directory on the storage medium if the first directory revision number is not the latest directory revision number. The directory may be rebuilt by scanning the entire data medium, or by using information present in directories on the storage medium. In some variations, the directory is rebuilt using the directory revision number.

In some variations, the media drive validation logic is operable to compare the first directory revision number read from a directory stored on the storage medium with a second directory revision number from a block on the storage medium. The validation logic may be operable to compare the first directory revision number read from an auxiliary memory on the storage medium with a second directory revision number from a block on the storage medium.

In some variations, the media drive also includes calculating logic for calculating a current correct directory revision number by adding an offset value to a value taken from a directory revision number of a directory on the storage medium. The current correct directory revision number is the a directory revision number that reflects the current operations on the storage medium, and is generally higher (greater than) the directory revision number that was used to reflect any previous operations on the storage medium (e.g., writing blocks, etc.).

The media drive may include writing logic for writing the current correct directory revision number with each block that is written to the storage media device by the recording head.

Also described herein are media drives including validation logic for validating a directory of a storage media device, the storage media device including a storage medium. The media drive may include a recording head to read or write the storage medium, validation logic for comparing a first directory revision number with a second directory revision number from a block on the storage medium, and calculating logic for calculating a current correct directory revision number. The media drive may also include writing logic for writing the current correct directory revision number with each block that is written to the storage media device by the recording head.

In one variation, a method for determining the validity of a directory for a storage media device (including a storage medium) includes reading a first directory revision number from the directory, reading a second directory revision number from a block on the medium, and comparing the first and second directory revision numbers to determine whether the first directory revision number is the most recent directory revision number.

The directory from which the directory revision number is read may be stored on the storage medium (e.g., tape media, linear tape media, etc.). In some variations, the storage medium may include an auxiliary memory, and the directory may be stored on the auxiliary memory. If the first directory revision number is not the latest directory revision number, then metadata in the directory may be considered invalid. For example, when a controller is used to control reading and writing from a storage media, the controller may compare the directory revision numbers, and if the directory revision number is not the latest directory revision number, the controller may ignore metadata (e.g., EOD location, the location of filemarks, etc.) and may rebuild the directory so that it is accurate. In particular, the controller may ignore metadata that reflects locations determined from the earlier revision of the directory.

The directory may be rebuilt by the controller. In some variations, the controller performs steps for rebuilding the directory using the directory revision number. For example, the directory may be rebuilt by determining the most recent directory revision number, and updating the directory to reflect information from the most recently written blocks (e.g., blocks that were written with the most recent directory revision number).

Blocks read and written to the storage media may include any appropriate blocks, such as data blocks, ECC (error correction code) blocks, and information blocks (e.g., metadata blocks, including directories, etc.).

Also described herein is a method of writing blocks to a storage media device (including a storage medium). The method may include determining a current correct directory revision number, and writing the current correct directory revision number with each block that is written to the storage media device. The method may also include disabling writing of the storage media device until a current correct directory revision number is determined. In some variations, the step of determining a current correct directory revision number includes setting the current correct directory revision number equal to a directory revision number read from the End of Data directory incremented by an offset (e.g., by 1). The step of determining a current correct directory revision number may include setting the current correct directory revision number equal to the directory revision number of a second directory revision number read from a Beginning of Track directory incremented by an offset (e.g., 64,000). The current correct directory revision number may be based on the position of the recording head (e.g., read/write head) relative to the storage medium (e.g., the linear data tape). When the storage medium is initially blank, the step of determining a current correct directory revision number may include initializing the directory revision number by setting the current correct directory revision number equal to 1.

The method of writing blocks to a storage media device may also include a step of updating a directory to include the current correct directory revision number. For example, the controller may update any appropriate directory on the storage medium of the storage media device.

Also described herein is a system for determining the validity of a directory of a storage media device (including a storage medium). The system may include a first directory revision number storage register, a recording head to read or write the storage medium, and a controller to control the reading head, wherein the controller is configured to compare a first directory revision number with a second directory revision number from a block on the storage medium. The first directory revision storage register may include a first directory revision number from a directory (e.g., from a directory read from the storage medium), and the second directory revision number may be read from a block on the storage medium.

### BRIEF DESCRIPTION OF THE DRAWINGS

FIG. 1 shows a tape storage subsystem.

FIG. 2 shows a block diagram illustrating one layout of a magnetic tape medium.

FIG. 3 shows a schematic diagram of a data block.

FIG. 4 illustrates a method of incrementing a directory revision number according to an aspect of the present invention.

FIG. 5 illustrates a method of determining the validity of a directory according to an aspect of the present invention.

FIG. 6 illustrates a block diagram of a media drive according to an aspect of the present invention.

### DETAILED DESCRIPTION OF THE INVENTION

The following description is presented to enable a person of ordinary skill in the art to make and use the invention. Descriptions of specific devices, techniques, and applications are provided only as examples. Various modifications to the examples described herein will be readily apparent to those of ordinary skill in the art, and the general principles defined herein may be applied to other examples and applications without departing from the spirit and scope of the invention. Thus, the present invention is not intended to be limited to the examples described herein and shown, but is to be accorded the scope consistent with the claims.

Some portions of the detailed description which follows are presented in terms of procedures, steps, logic or logic blocks, processing, and other symbolic representations of operations on data bits that can be performed on computer memory. Procedures, computer executed steps, logic or logic blocks, processes, etc., are here conceived to be a self-consistent sequence of steps or instructions leading to a desired result. The steps are those utilizing physical manipulations of physical quantities. These quantities can take the form of electrical or magnetic signals capable of being stored, transferred, combined, compared, and otherwise manipulated in a computer system. These signals may be referred to at times as bits, values, elements, symbols, characters, terms, numbers, or the like. Each step may be performed by hardware, software, firmware, or combinations thereof.

Described herein are methods of writing blocks including a directory revision number, so that a current correct directory revision number is stored in all blocks as they are written. Blocks may comprise data blocks, ECC blocks, or information blocks A current corrected directory revision number (sometimes just referred to as a current or correct directory revision number) is the directory revision number reflecting the most recent action that would trigger a directory revision (e.g., writing a block to the storage medium). Directory revision numbers allow a drive controller to quickly determine if a recovered directory applies to data read from the medium (e.g., data tape medium). This information can then be used to determine where key metadata is stored on the media, and whether the data being read is valid based on the recovered directory.

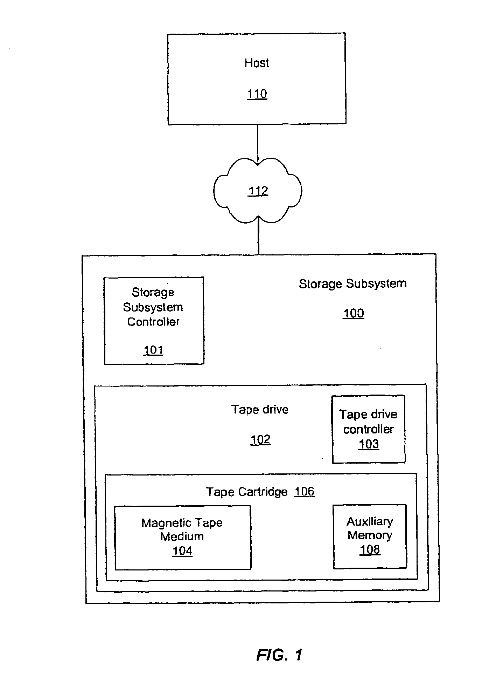

Directory revision numbers may be useful with any storage subsystem. Storage subsystems, such as magnetic tape libraries, are widely used for storing information in digital form. An exemplary tape storage subsystem 100 is shown in FIG. 1. A tape subsystem 100 may include a storage subsystem controller 101 for controlling one or more tape drives 102 contained within the storage subsystem 100 and for controlling other components of the storage subsystem 100, such as the tape picker, which is used to select and load tape cartridges 106 into the tape drives 102. The storage subsystem 100 may be coupled to a host system 110 which transmits I/O requests to the storage subsystem 100 via a host/storage connection 112.

The tape drive 102 reads and writes data to the primary storage medium, shown in FIG. 1 as a magnetic tape medium 104 contained within a removable magnetic tape cartridge 106. The magnetic tape medium 104 typically comprises a thin film of magnetic material which stores the data. The tape medium 104 may be moved by the tape drive 102 between a pair of spaced apart reels and past a data transducer to record or read back information. In one type of tape drive system, one of the reels is part of the tape drive 102 while the other reel is part of the removable tape cartridge 106. For this type of tape drive system, the reel which is a part of the tape drive 102 is commonly referred to as a take-up reel, while the reel which is a part of the tape cartridge 106 is commonly referred to as a cartridge reel. Upon insertion of the tape cartridge 106 into the tape drive 102, the magnetic tape medium 104 on the cartridge reel is coupled to the take-up reel of the tape drive 102. Subsequently, prior to removing the tape cartridge 106 from the tape drive 102, the storage tape 104 is rewound onto the cartridge reel and is then uncoupled from the take-up reel.

A tape drive 102 typically includes a tape drive controller 103 and a removable tape storage media device. In this case, the removable tape storage media device comprises a tape cartridge 106 including a magnetic tape medium 104 as the primary storage medium for storing data and does not include an auxiliary memory. Although magnetic tape media is described in the examples herein, one of skill in the art would realize that the methods and systems for using directory revision numbers described may be used with any appropriate media, including magnetic tape media, other magnetic media (e.g., disks), optical media, and the like.

Furthermore, any reasonable data format may be utilized for the tape storage media device. Exemplary data formats include well known data formats, e.g., associated with Linear Tape-Open (LTO) tape, Digital Linear Tape (DLT), Super DLT (SDLT), and the like. The varying data formats may include various other known and unknown data formats, e.g., future developed data formats.

The following discussion describes examples particularly applicable as part of a linear tape drive system utilizing thin film magnetic tape heads for performing read and write operations on magnetic media (such as magnetic particle tape). Additionally, the magnetic media discussed herein comprises magnetic recording tape. It will be understood, however, that the various examples may be useful with other tape storage media and devices, such as tape cassettes including two tape reels.

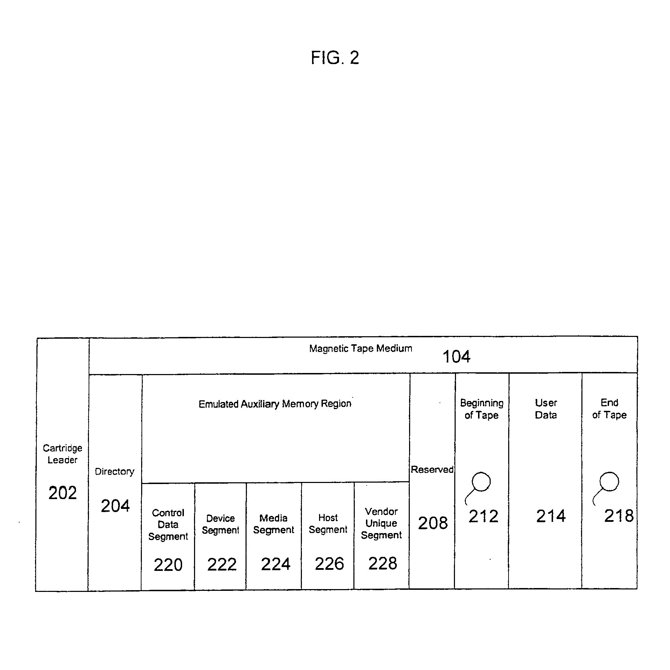

FIG. 2 shows one example of a block diagram illustrating a region of the magnetic tape medium 104. A cartridge leader 202 is shown at the beginning of the magnetic tape medium 104. The cartridge leader 202 is coupled to the buckle mechanism for coupling with a drive leader of the tape drive 102 and is not used to store data. Next is a directory region 204, which may store directory data used to enable the tape drive 102 to access user data in an efficient manner, as described further below. The directory region may also be referred to as a cartridge log. In some variations, a separate cartridge log may also be included. A calibration region (not shown) may also be provided before the directory region 204 for assisting the tape drive 102 in its initial calibration process.

The directory region 204 may be followed by an emulated auxiliary memory region 206. The emulated auxiliary memory region 206 can be used to store data that would have been stored in a separate auxiliary memory provided in the tape cartridge 106. Some variations do not include emulated auxiliary memory regions. The emulated auxiliary memory region 206 can be segmented into multiple regions for storing specific types of data with different types of access restrictions. Next is a reserved region 208 which contains a predetermined amount of recordable space reserved for future use. The reserved region 208 can be used, for example, to expand the emulated auxiliary memory region 206, if additional capacity is desired. In some variations, the reserved region is not included.

After the reserved region 208 is a beginning of tape region 210, which is indicated by a beginning of tape hole 212. The tape drive 102 can use the beginning of tape hole 212 to determine where to begin storing the user data in the user data region 214. FIG. 2 is not to scale; in typical tape cartridges, the user data region 214 consumes the vast majority of the length of the magnetic tape medium 104. After the user data region 214 is an end of tape region 216 marked by an end of tape hole 218.

In the example of FIG. 2, device segment 222 may be used to store performance information including error data relating to the cartridge, drive history information, and other predictive failure information. For example, device segment 222 can be used to store device attributes regarding the operation of the tape drive 102, such as, for example, the load count for that particular tape cartridge 106, drive related channel problems, drive related servo tracking problems, magnetic tape defect errors, tracking servo tape errors, and the like. The error data may be stored for tracks and segments that have read/write activity. The error data may be retrieved and processed for diagnostic and predictive analysis to more efficiently manage the system as described in greater detail below.

It should be recognized, however, that error data may be stored in other segments, and in other locations, and may be further distributed over more than one data segment of tape medium 104. For example, tape history and error information may be stored and retrieved from a directory 204 and used for diagnostic and predictive analysis.

Blocks (e.g., data blocks, ECC blocks, and information/metadata blocks) are typically written by a single head of the tape drive 102 head assembly, with an unwritten gap between blocks. A block is among the smallest writeable/readable elements, and may include data, ECC and information (metadata) specific to each block. For example, a single block may include different sections, such as a data section, one or more control fields (CF1, CF2), ECC (e.g., inner ECC), EDC, etc. Additional sections may also be included (e.g., preamble, postamble, syncmarc, page entries, etc.). It should be understood that virtually any appropriate block size and format may be used with the directory revision number described herein. For example, different systems (e.g., different tape drive systems), may have blocks of different sizes and formats. In one variation, the block is approximately 12K bytes. In any variation of a block, a directory revision number ("DRN") may be included as part of the block.

Blocks may be grouped or partitioned in any appropriate fashion. For example, blocks may be packaged in an envelope (e.g., a group of blocks that are all written at the same time).

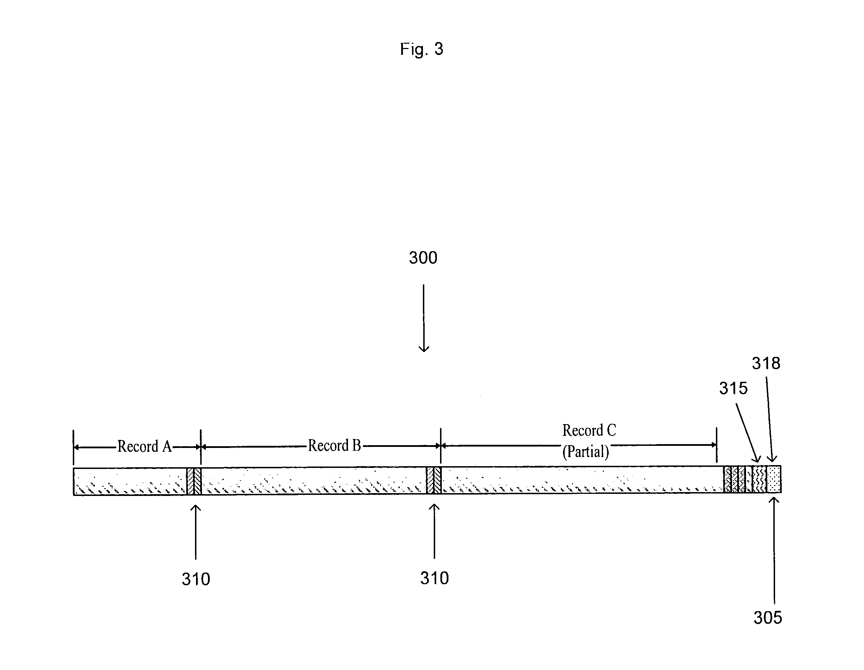

FIG. 3 illustrates a schematic of a block 300 (shown as a data block) including a directory revision number 305. The block shown in FIG. 3 includes three data records (A, B, and C). Each complete data record (e.g., A and B) are followed by a pair of CRCs 310 (Cyclic Redundancy Checks). Two control fields, CF 1 315 and CF2 318, are appended to the end of the block. The directory revision number 305 (or directory revision number field) is shown as part of the second control field (CF2) 318, and contains a number that indicates the revision of the directory that was valid when the block was written, as described further below. As mentioned, the directory revision number 305 may be included anywhere in the block.

Although each block may include a directory revision number 305 indicating the revision number that was valid when the block was written, the directory revision number may also be included as part of a directory, as described above.

### Directory

A data medium may include any appropriate number of directories. For example, a data tape may have many copies of a directory. The directory may be located at the beginning of a data tape, at the beginning of a track (BOT directory), at the end of the data tape (EOD), or any appropriate location. The different directories may be identical, or may contain some information that is specific to the location of the directory. In some variations, all of the copies of the directory on a medium include a directory revision number.

In general, a directory may span multiple blocks (and each block may likewise include a directory revision number, as indicated above), and may contain multiple information or data fields. For example, a directory may include a header with basic information (e.g., tape directory format, media code, etc.), alignment tables (e.g., for calibration of the tape within a drive), Dmarker tables (relating the logical position of blocks to their physical position), the location of the end of data (EOD) envelope, the location of the end of track (EOT), partition tables (e.g., by track, etc), or the like.

The directory (or directories) may be used to locate data (e.g., on a read command), to provide information about the organization of the data medium (e.g., format of data, compression algorithms, etc.), to provide statistics on the data medium (e.g., the number of read/write operations, etc.), and to direct the position the head for read and/or write commands. In some variations, some of the information in the directories is updated, and some of the information in the directory is constant. Directories may be updated in local working memory (or auxiliary memory) of the drive, and can be written to the tape medium after an appropriate action on the tape. For example, the directory at the beginning of the tape can be updated after a rewind or equivalent operation places the tape write elements at beginning of the tape near this directory. Thus, directory updates written to the tape may not be sequential, but may reflect that the last updated version of the directory that was valid in the memory of the controller when the directory field is actually written to the tape directory.

### Directory Revision Number

In general, a directory revision number may be any appropriate number (e.g., of any appropriate magnitude) for indicating the current correct directory revision number. Thus, the directory revision number may comprise a field (e.g., a register, variable, etc.), capable of storing a value. In some variations, the directory revision number comprises a 32-bit unsigned integer (e.g., the directory revision number may be between 0 and 4.295x10⁹). The magnitude of the directory revision number may be determined (or chosen) based on the storage medium. For example, the magnitude of the directory revision number may depend on the anticipated useful lifetime of the storage medium. In some variations, once the directory revision number is incremented up to its maximum, the tape becomes unwriteable, preventing rollover.

The directory revision number should be incremented whenever the storage medium is written. Thus, a system using directory revision numbers to validate the directory only permits the storage medium to be written after the determining an appropriate directory revision number. An appropriate directory revision number is a directory revision number that has been incremented to a value that reflects the most recent revision of the directory.

When a storage medium is first loaded into a drive, the current correct directory revision number is unknown (and thus "invalid," and writing is not allowed). Although, as described above, the directories present on the tape may include a directory revision number, these directory revision numbers may not accurately reflect the latest revision (e.g., the last write command) of the storage medium. For example, the storage medium (e.g., data tape) may have been stopped or the storage medium removed before updating a directory, or all of the directories. Thus, the current correct directory revision number is assumed to be invalid after loading the storage medium into the drive.

The current correct directory revision number must therefore be determined based on the status of the tape. Any appropriate method may be used to determine the appropriate or appropriately incremented, directory revision number. For example, after loading the storage medium into the drive, the entire storage medium may be scanned to determine the highest directory revision number (e.g., the maximum value of the directory revision numbers present on the tape). Alternatively, the directory revision number of the end of data (EOD) directory may be used. Once the most recent (e.g., highest) directory revision number has been determined, the directory revision number may be increment (e.g., by one), enabling writing of the storage medium. However, scanning the entire medium (e.g., the entire length of the data tape) may be prohibitively slow. Other methods of determining a properly incremented directory revision number may instead rely on directories located near the load position of the data storage medium, thereby avoiding the need to scan to the end of the data stored on the data storage medium.

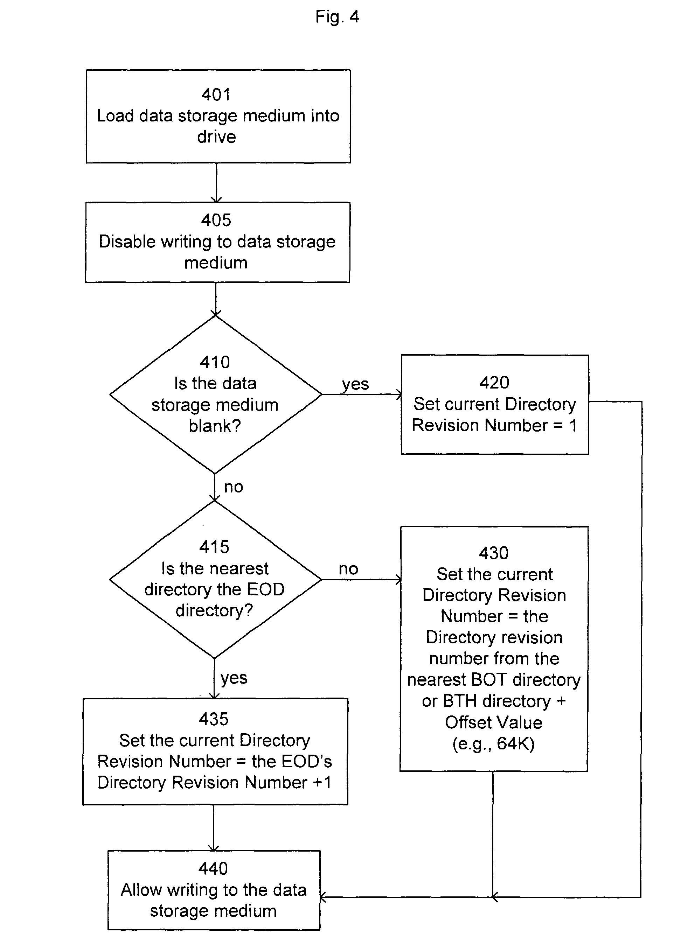

FIG. 4 illustrates one method for determining an appropriate directory revision number. The method shown in FIG. 4 determines a properly incremented directory revision number based in part on the position of the head assembly is in relation to the data storage medium. When the data storage medium is first loaded into the drive 401, the current directory revision number is invalid (e.g., and may initially be set to zero). The drive controller does not know what the most recent directory revision number is. Writing to the data storage medium is therefore disabled 405, until a correctly incremented directory revision number has been determined.

If the data storage medium is new, and has not yet been written at all (e.g., is blank) 410, then the directory revision number should be initialized to an initial (non-zero value), such as one 420. A blank data storage medium may be identified by any appropriate method, such as the absence of any discernable directory or other written information on the tape. Once the directory revision number has been initialized (e.g., to 1), writing using this properly incremented directory revision number should be enabled 440. If the data storage medium is not blank 415, the most recent directory revision number can be identified by looking to the nearest directory. The nearest directory can be any directory that is relatively near the head assembly, in either the forward or backwards direction (e.g., moving the tape forwards or backwards).

If the nearest directory is the end of data (EOD) directory 435 (in variations having an EOD directory), then the current correct directory revision number should be set to the old directory revision number of the EOD directory plus some offset. In some variations, the EOD directory is always the last thing written when writing new data to the tape, and should therefore contain an accurate directory revision number. Thus, the current correct directory revision number may be incremented from the EOD directory revision number by a value as small as one (1). Once the current correct directory revision number has been properly set to an incremented directory revision number, writing to the storage medium using the current correct directory revision number should be allowed 440.

If the head assembly is not near the EOD directory, then the current correct directory revision number should be determined by the directory revision number nearest to directory, such as the nearest BOT or BTH directory (whichever is closer) 430. In this case, because it cannot be determined how recently either of these directories was written, it is assumed that a current correct directory revision number is less than some offset (e.g., 64,000) from the directory revision number of the nearest directory. For example, if the nearest directory is a beginning of track (BOT) directory, then a valid directory revision number is set equal to the directory revision number of the BOT directory plus an appropriate offset (e.g., 64K).

Any appropriate offset may be chosen. For example, relatively large offsets may be chosen to ensure that there is a good separation between any previous directory revision numbers and the current incremented directory revision number. Thus, in some variations, the directory revision number is incremented by 64,000. Once the directory revision number is correctly incremented, blocks may be written to the storage medium 440.

In some variations, a controller (e.g., tape drive controller 103) controls the determination of the correctly incremented directory revision number. A controller may compare directory revision numbers and may control a recording head to read/write blocks of the storage media. A controller may be part of a system for determining the validity of a directory of a storage medium. For example, the system may include one or more registers (e.g., memory registers) for storing a directory revision number. A directory revision number register may be part of the controller, or may be a separate memory element. The controller can compare a first directory revision number stored in the register with a second directory revision number (e.g., read from the storage medium), and determine if one is greater than, less than, or equal to, the other. Thus, the controller can determine if a directory corresponds to the most recent directory revision number, as described above. For example, a register may hold the directory revision number read from a directory in the storage medium, and the controller may compare this register to directory revision numbers read from blocks of the storage medium.

Thus, a system for using a directory revision number to validate a directory may include a drive controller for correctly incrementing and/or writing directory revision numbers.

### Using Directory Revision Numbers

The directory revision numbers written as part of the blocks and as part of a directory (or directories) may be used to control writing to the data medium, as described herein. Thus, no blocks may be written until the current correct directory revision number is selected. Further, the data revision number may be used to generate or rebuild a directory, or to invalidate all or part of an out-of-date directory.

The directory revision number allows the controller to quickly determine if a recovered directory applies to information being read, and where key (and accurate) metadata is stored on the media. This information also allows the controller to determine whether the data being read is valid based on the recovered directory. For example, if the directory revision number of a recovered directory is higher than the directory revision number in the block being read, then the controller can determine that the recovered directory was written after that block. Thus, the controller knows that the information in that directory is accurate for information in blocks having the lower directory revision number.

If the directory revision number from the block is higher than the directory revision number from the recovered directory, then the controller knows that the recovered directory is out of date, and does not reflect the information written in the blocks with higher directory revision numbers. This may also trigger the controller to rebuild the directory, or to cause the directory to be rebuilt.

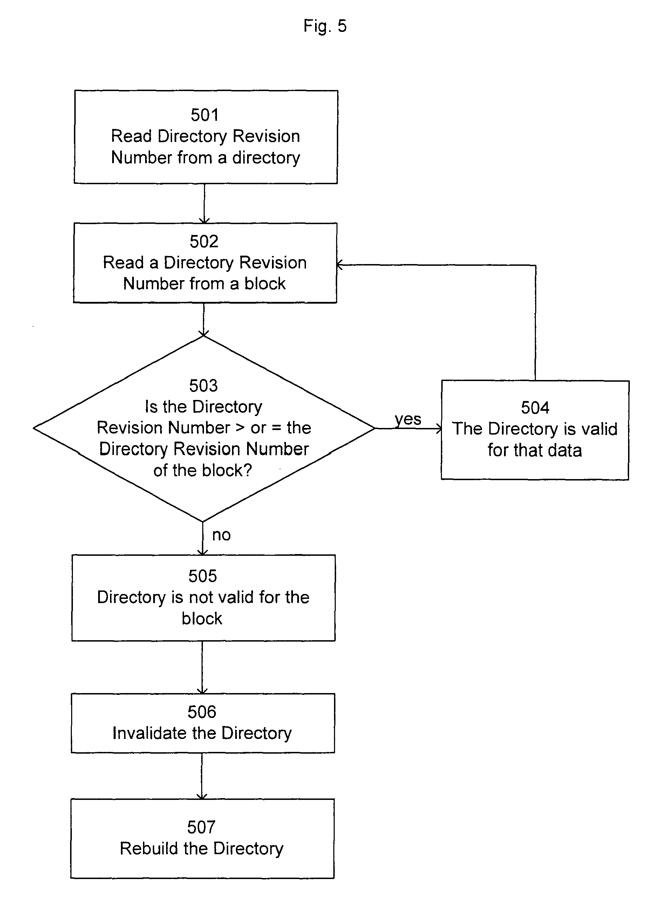

FIG. 5 shows a method of determining if a directory is valid using the directory revision number. As described herein, a directory revision number is first read from a director 501. For example, the controller may cause the recording head (e.g., the read/write head) to read the storage medium until a directory is identified. Thus, a first directory having a directory revision number may be chosen based on how near the directory is to the starting position when reading the tape. In some variations, the storage medium (e.g., tape) may be initialized to a starting position (e.g., at the beginning or end of the tape). The directory revision number read from this first directory may be held by the controller (or in a register that the controller can access) for comparison to other directory revision numbers read from the storage medium 502.

Additional directory revision numbers read from the storage medium 502 may be read from the blocks present on the storage medium. Typically, each block is marked with a directory revision number, as described herein. The directory revision number can then be compared to the first (or reference) directory revision number 503. If the directory revision number from the directory 501 is greater than or equal to the directory revision number read from a block (e.g., the second directory revision number) 502, then the directory is valid for this data 504. A directory revision number may then be read from the next block 502.

However, if the directory revision number from the directory 501 is less than the directory revision number read from a block (e.g., the second directory revision number) 502, then the directory is not valid for that block 505. This means that any identifying data (e.g., addresses and other metadata) held in the directory is not valid, since it will not include the information written in the blocks identified as having a higher directory revision number. Once the controller has identified an invalid directory, it may mark the directory invalid 506, or it may invalidate only part of the directory, such as the metadata, that it knows is invalid. Further, the controller may initiate rebuilding the directory 507.

Any appropriate method may be used to rebuild the directory so that it reflects the most current information. For example, the directory may be rebuilt by scanning the tape for the EOD location (which is typically very time consuming), or by comparing directories to find the most recent directory (e.g., by comparing directory revision numbers). In one variation, the directory revision numbers can be used to rebuild the directory. According to the system for writing directory revision numbers described herein, data can only be written once a current corrected directory revision number has been determined. Thus, the highest directory revision number reflects the most recently written block(s). The controller can invalidate metadata in the directory (e.g., EOD location, filemark locations, etc) and use information read from the highest directory revision number block(s) to rebuild the directory (including metadata).

### Media Drive

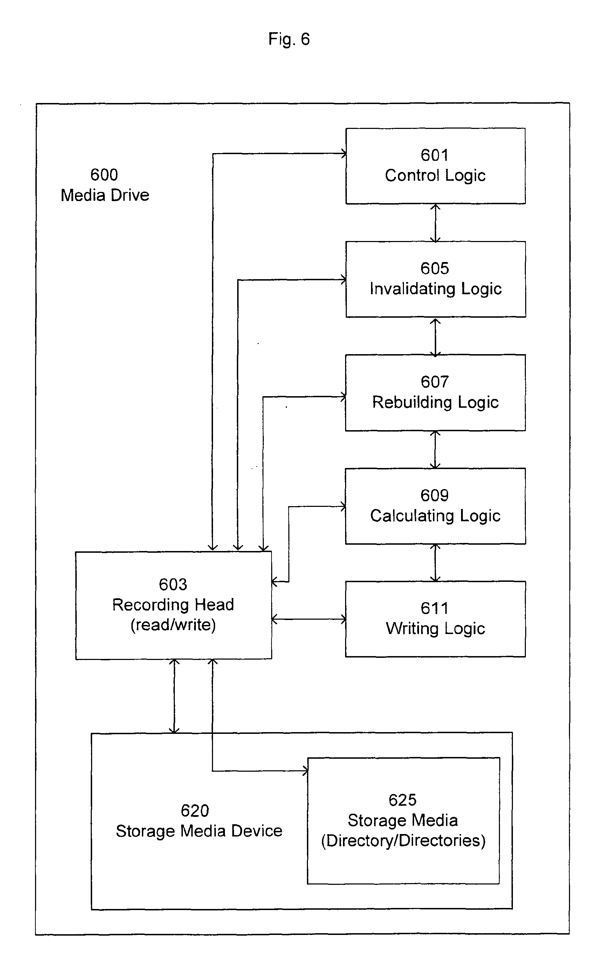

As described above, a media drive may include logic for analyzing directory revision numbers, calculating directory revision numbers, writing directory revision numbers, and otherwise using directory revision numbers (e.g., to rebuild the directory), as described above. FIG. 6 shows a schematic diagram of a media drive 600 that can verify the validity of a directory. The media drive 600 shown in FIG. 6 includes a recoding head 603 for reading/writing to a storage media 625. In general, the media drive may control the operation of the media drive, and may also control or coordinate the operation of the storage media device 650 and/or storage media 625. In some variations, the media drive includes a controller (e.g., a tape drive controller) for controlling the storage media.

The media drive 600 may also include validation logic 601, for verifying the validity of a directory of the storage media device 620 or a directory on the storage media 625. For example the storage media device may be a tape cartridge having digital linear tape as the storage media. One or more directories may be present on the storage media, as described herein. Validation logic 601 may execute any of the comparison and control steps described herein. For example, validation logic 601 may compare a first directory revision number (e.g., from a directory on the storage media, including an auxiliary memory, or a "virtual directory within the media drive itself, etc.) with a second directory revision number (e.g., read from a block on the storage medium) to determine whether the first directory revision number is most recent directory revision number. Thus, validation logic 601 may determine if the first directory revision number is greater than, equal to, or less than the second directory revision number, and may trigger one or more consequences based on this result. The validation logic may interact or be connected to any of the other portions of the media drive, including the recording head 603, and/or any of the other logic regions, either directly or indirectly.

In some variations, the media drive 600 also includes invalidating logic 605 that can implement any of the invalidating steps described herein. For example, if the validation logic determines that a directory revision number is invalid, the media drive may invoke the invalidating logic to invalidate some (or all of) the directory, or of the blocks (or portions of the blocks such as metadata in a block). The invalidating logic may interact or be connected to any of the other portions of the media drive, including the recording head 603, and/or any of the other logic regions, either directly or indirectly.

The media drive 600 may also include rebuilding logic 607 that can implement any of the directory rebuilding steps described herein. For example, if the validation logic determines that a directory revision number is invalid, the media drive may invoke the rebuilding logic to rebuild some (or all of) a directory on the storage media. The invalidating logic may interact or be connected to any of the other portions of the media drive, including the recording head 603, and/or any of the other logic regions, either directly or indirectly.

In some variations, the media drive 600 also includes calculating logic 609 that can implement any of the steps for calculating a current correct directory, as described herein. In some variations, the calculating logic may also determine if the storage media is blank (e.g., if it hasn't been written) and the calculating logic may initialize (e.g., set to one) a current correct directory revision number. The calculating logic, and any of the logic components of the media drive (e.g., validation logic, invalidating logic, rebuilding logic, etc.), may be used or may operate independently of the other components, particularly the other logic components. Furthermore, the invalidating logic may interact or be connected to any of the other portions of the media drive, including the recording head 603, and/or any of the other logic regions, either directly or indirectly.

The media drive 600 may also include writing logic 611 that can implement any of the writing steps (e.g., for writing blocks) described herein. For example, once a new current correct directory revision number has been calculated by the calculating logic, the writing logic 611 may be used to write the correct directory revision number with each block written to the storage media. In some variations, writing to the storage media is prevented until the calculating block has determined a current correct directory revision number. Thus, the writing logic 611 and/or the calculating logic 609 may prevent writing until a current correct directory revision number has been calculated. Writing logic 611 may also control or direct the writing (or re-writing) of an updated directory that includes the current correct directory revision number. Writing logic 611 may interact or be connected to any of the other portions of the media drive, including the recording head 603, and/or any of the other logic regions, either directly or indirectly.

Thus, the directory revision number may be used to determine what directories are valid, and may be used to rebuild invalid directories. As described herein, this may be an advantage when a valid directory is not recovered. Systems that do not use directory revision numbers may not be able to detect invalid directories, leading to errors, and may have to sequentially read all of the data on a tape until the EOD is encountered to determine if a directory is valid or not.

Although the present invention has been described in conjunction with particular aspects, it will be appreciated that various modifications and alterations may be made by those skilled in the art without departing from the spirit and scope of the invention. The invention is not to be limited by the foregoing illustrative details.

## Claims

1. A media drive including logic for determining the validity of a directory of a storage media device, the storage media device including a storage medium, the media drive comprising:
a recording head to read or write the storage medium; and
validation logic operable to determine if the directory is valid by comparing a first directory revision number associated with the directory with a second directory revision number associated with a block on the storage medium.

2. The media drive of claim 1, further comprising invalidating logic operable to invalidate metadata in a directory if the first directory revision number is not the most recent directory revision number on the storage medium.

3. The media drive of claim 2, wherein the invalidating logic is operable to invalidate an EOD location in a directory on the storage medium.

4. The media drive of claim 2, wherein the invalidating logic is operable to invalidate a filemark location in a directory on the storage medium

5. The media drive of claim 1, further comprising rebuilding logic operable to rebuild a directory on the storage medium if the first directory revision number is not the latest directory revision number.

6. The media drive of claim 1, wherein the validation logic is operable to compare the first directory revision number read from a directory stored on the storage medium with a second directory revision number from a block on the storage medium.

7. The media drive of claim 1, wherein the validation logic is operable to compare the first directory revision number read from a directory stored on an auxiliary memory on the storage medium with a second directory revision number from a block on the storage medium.

8. The media drive of claim 1, further comprising calculating logic operable to calculate a current correct directory revision number by adding an offset value to a value taken from a directory revision number of a directory on the storage medium.

9. the media drive of claim 8, further comprising writing logic operable to write the current correct directory revision number with each block that is written to the storage media device by the recording head.

10. A media drive including validation logic operable to validate a directory of a storage media device, the storage media device including a storage medium, the media drive comprising:
a recording head to read or write the storage medium;
validation logic operable to determine if the directory is valid by comparing a first directory revision number associated with the directory with a second directory revision number associated with a block on the storage medium; and
calculating logic operable to calculate a current correct directory revision number.

11. The media drive of claim 10 further comprising writing logic operable to write the current correct directory revision number with each block that is written to the storage media device by the recording head.

12. A method of validating a directory of a storage media device, the storage media device including a storage medium, the method comprising:
reading a first directory revision number from the directory;
reading a second directory revision number from a block on the medium; and
comparing the first and second directory revision numbers to determine whether the first directory revision number is the most recent directory revision number.

13. The method of claim 12, wherein the directory is stored on the storage medium.

14. The method of claim 12, further comprising invalidating metadata in the directory if the first directory revision number is not the latest directory revision number.

15. The method of claim 12, further comprising rebuilding the directory if the first directory revision number is not the latest directory revision number.

16. The method of claim 12, further comprising:
determining a current correct directory revision number; and
writing the current correct directory revision number with each block that is written to the storage media device.

17. The method of claim 16, wherein the step of determining a current correct directory revision number further comprises:
setting the current correct directory revision number equal to a directory revision number read from the End of Data directory incremented by an offset

18. The method of claim 17, wherein the offset is 1.

19. The method of claim 16, wherein the step of determining a current correct directory revision number further comprises:
setting the current correct directory revision number equal to the directory revision number of a second directory revision number read from the Beginning of Track directory incremented by an offset.

20. The method of claim 19, wherein the offset is 64,000.

21. The method of claim 16, wherein the step of determining a current correct directory revision number further comprises:
setting the current correct directory revision number equal to 1 when the storage medium is blank.

22. The method of claim 16, further comprising recording the current correct directory revision number to a directory on the storage media device.
